(19) Europäisches Patentamt
European Patent Office
Office européen des brevets

(11) **EP 0 961 083 B1**

(12) **FASCICULE DE BREVET EUROPEEN**

(45) Date de publication et mention
de la délivrance du brevet:
**19.02.2003 Bulletin 2003/08**

(51) Int Cl.⁷: **F24D 3/14**

(21) Numéro de dépôt: **99440120.6**

(22) Date de dépôt: **25.05.1999**

(54) **Plaque de sol pour une installation de chauffage par le sol**

Bodenplatte für eine Fussbodenheizungsanlage

Ground-plate for a floor heating system

(84) Etats contractants désignés:
**AT BE CH CY DE DK ES FI FR GB GR IE IT LI LU
MC NL PT SE**

(30) Priorité: **26.05.1998 FR 9806586**

(43) Date de publication de la demande:
**01.12.1999 Bulletin 1999/48**

(73) Titulaire: **REHAU S.A.
57340 Morhange (FR)**

(72) Inventeurs:
• **Vançon, Didier
88360 Rupt sur Moselle (FR)**
• **Jacquot, Bernard
70300 Saint Sauveur (FR)**

(74) Mandataire: **Metz, Paul
Cabinet METZ PATNI,
63, rue de la Ganzau
67100 Strasbourg (FR)**

(56) Documents cités:
**EP-A- 0 035 722        EP-A- 0 046 519
EP-A- 0 174 670        DE-A- 3 020 405
DE-U- 9 202 729        DE-U- 9 203 574**

## Description

La présente invention concerne une plaque de sol pour une installation de chauffage par le sol, à tubes d'eau noyés dans la chape de béton, cette plaque étant destinée à être combinée à d'autres plaques identiques ou analogues pour former un tapis de plots recevant le ou les ensembles de tubes pour les bloquer en place jusqu'à la coulée puis la prise du béton.

Une installation de chauffage par le sol, à eau chaude, mais qui peut également recevoir de l'eau froide pour la réfrigération ou la climatisation, comprend un ou plusieurs ensembles de tubes de circulation d'eau, intégrés à la chape de sol. Ces tubes doivent être répartis suivant un tracé aussi régulier que possible et conserver leur positionnement pendant la réalisation complète de la chape, c'est-à-dire jusqu'à la prise du béton.

Une technique ancienne consistait à fixer les tubes au treillis métallique d'armature du béton. Une technique plus récente et plus appropriée pour l'efficacité de l'installation de chauffage ou plus généralement de climatisation, consiste à utiliser des plaques d'isolation en mousse de plastique, qui comportent des moyens permettant d'accrocher les tubes et de les maintenir en place. Ces moyens sont constitués par des bossages ou plots définissant entre eux des passages pour recevoir les tubes. Les plaques sont en général de forme carrée ou rectangulaire et la forme des plots est telle que les plaques se réunissent pour constituer un ensemble régulier de plots permettant de recevoir les tubes suivant le tracé choisi en fonction de la forme de la surface à chauffer.

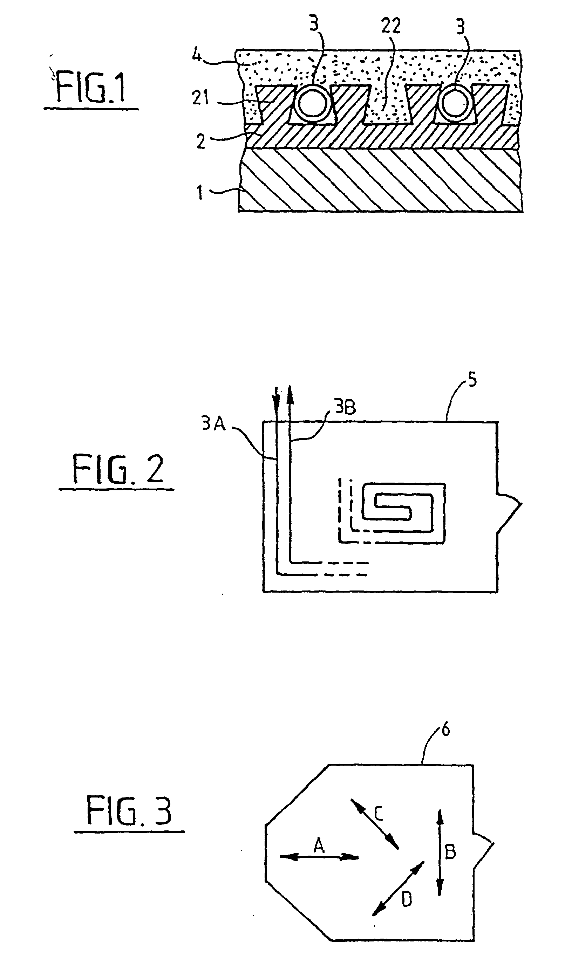

La vue en coupe de la figure 1 montre la structure d'une installation de chauffage par le sol. Cette installation est placée sur une dalle en béton 1 qui reçoit des plaques de sol 2 avec des plots ou bossages 21 définissant des intervalles 22 à section en forme de trapèze c'est-à-dire à contre-dépouille pour recevoir des tubes 3 dans lesquels circule le fluide caloporteur (en général de l'eau chaude ou de l'eau froide). L'ensemble est revêtu d'une chape 4 de béton léger qui bloque les tubes. A la mise en place, cette chape est en général très liquide pour bien pénétrer dans les intervalles et assurer à la fois la tenue des tubes en complément à la tenue procurée par les plaques de sol 2 et le contact thermique nécessaire. La chape 4 peut recevoir un revêtement en général un dallage, un carrelage ou même du parquet.

Un chauffage par le sol est extrêmement intéressant sur le strict plan thermique car la source de chaleur est de grande surface et permet de répartir régulièrement la chaleur dans le volume chauffé. Toutefois, pour que ce mode de chauffage ne soit pas nuisible pour la santé, il est indispensable que la source de chaleur ainsi constituée fonctionne à une température faible, de l'ordre d'une vingtaine de degrés. Or, pour fournir la puissance calorifique nécessaire, il faut une répartition régulièrement serrée de tubes. De plus, ces tubes doivent couvrir toute la surface à chauffer, en général le sol d'une pièce et ces tubes doivent être continus pour permettre la circulation du fluide.

Ces différents impératifs et, surtout, l'adaptation du tracé des tubes à la forme de la surface à chauffer qui n'est pas nécessairement rectangulaire, compliquent considérablement le problème et nécessitent des plaques de sol permettant une telle répartition. Certaines plaques connues comportent des plots de forme triangulaire à sommets écrasés constituant les bords servant à retenir les tubes. Ces plots sont répartis par groupes de quatre autour d'un petit cercle définissant la forme curviligne des côtés et quatre groupes de quatre plots sont répartis autour d'un grand cercle.

Une autre forme de réalisation de plaque comporte des plots en forme de cabochons reliés à chaque fois par quatre branches pour recevoir un tube à eau chaude.

Mais, ni l'une ni l'autre plaque de sol ne permet une répartition régulière et serrée des tubes à eau chaude.

La figure 2 montre très schématiquement un exemple de tracé de tubes à eau chaude dans une pièce 5 de forme rectangulaire. Le tube aller 3A et le tube retour 3B sont jumelés et répartis suivant une hélice représentée seulement au centre du rectangle.

Cette disposition simple est possible dans le cas d'une surface de chauffe 5 rectangulaire (figure 2). Il n'en est plus ainsi si cette surface de chauffe est de forme polygonale plus compliquée comme la forme G représentée à la figure 3. Cette figure montre également les quatre directions dans lesquelles il faut pouvoir disposer au moins en partie les tubes.

Ces directions, rapportées à la figure 3, sont la direction horizontale A, la direction verticale B et deux directions inclinées à 45°, C et D. On estime qu'avec de telles possibilités d'orientation des tubes, on peut couvrir de manière satisfaisante les formes de surfaces à contour polygonal.

Malheureusement, les plaques de sol existant actuellement ne comportent pas de plots permettant de réaliser une répartition très serrée des tubes dans les directions A, B, C, D indiquées à la figure 3. De manière très résumée, les plaques de sol existant actuellement permettent certes d'obtenir des tracés réguliers de tubes à eau chaude mais au prix d'un écartement des tubes très important préjudiciable à la régularité de la température dans la surface de la dalle.

La présente invention a pour but de remédier à ces inconvénients et se propose de réaliser une plaque de sol permettant une répartition très régulière des tubes à eau chaude selon un pas extrêmement-réduit.

A cet effet, l'invention concerne une plaque de sol du type défini ci-dessus, caractérisée en ce que les plots sont constitués par des îlots définis chacun sur cinq côtés par un premier réseau carré de traces de tubes, de module « a » combinés à un deuxième réseau carré de traces de tubes de module « $a\sqrt{2}$ », incliné à 45° par rapport au premier réseau et dont l'origine est placée au milieu d'un côté d'un carré du premier réseau.

Une plaque selon l'invention permet une couverture extrêmement serrée et précise d'une surface avec des plots pour retenir des tubes à eau chaude. Elle offre de multiples possibilités de tracé pour des tubes de chauffage assurant l'efficacité de l'installation du chauffage.

Suivant d'autres caractéristiques avantageuses :

- . les plots ont des côtés en contre-dépouille pour former des traces de tubes en contre-dépouille ;
- . au moins l'un des côtés d'un plot a un tracé discontinu ;
- . le tracé discontinu est formé par une partie en saillie bordée de deux parties en retrait ;
- . le côté discontinu est constitué par deux parties en saillie bordant une partie en retrait.

La présente invention sera décrite ci-après de manière plus détaillée à l'aide des dessins annexés dans lesquels :

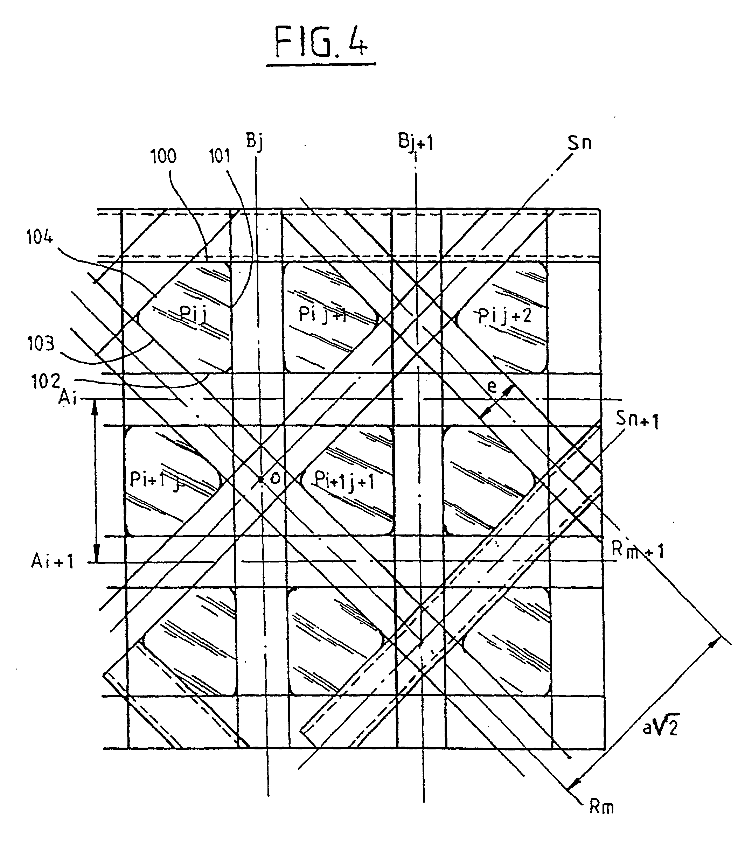

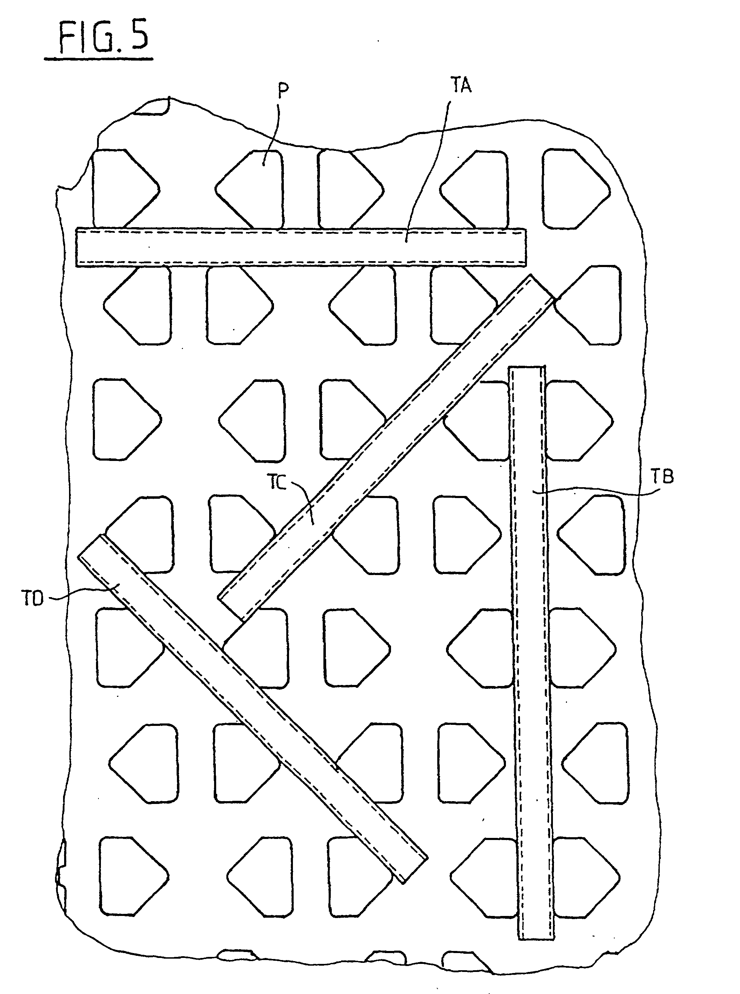

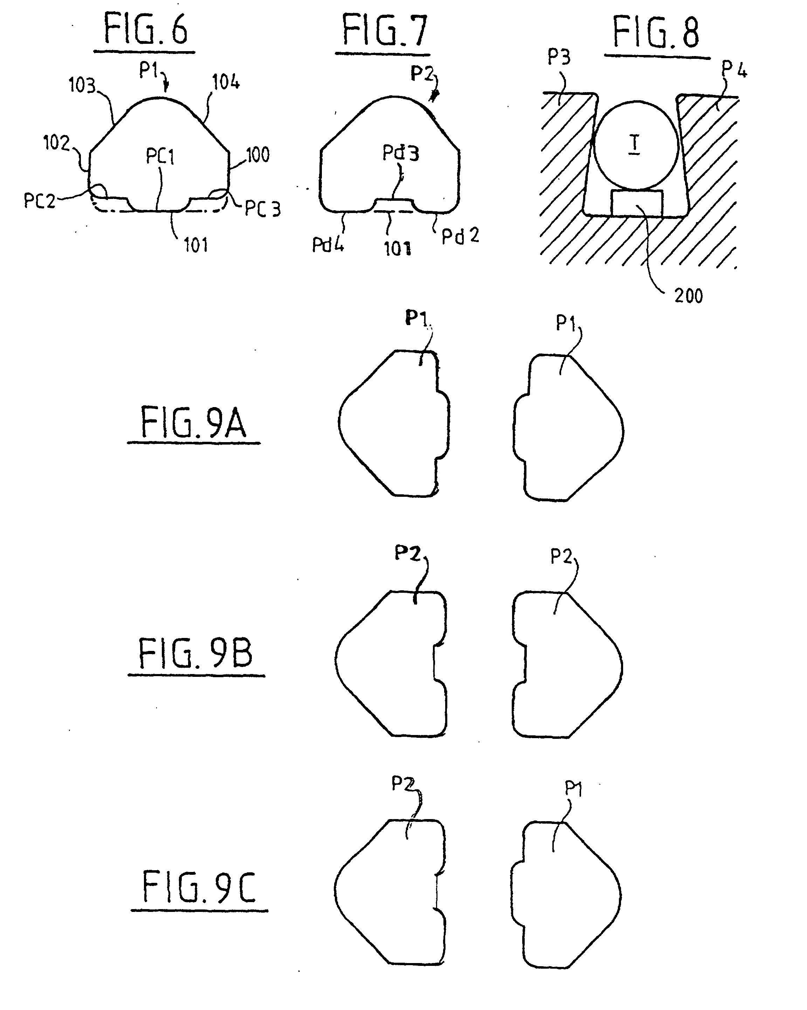

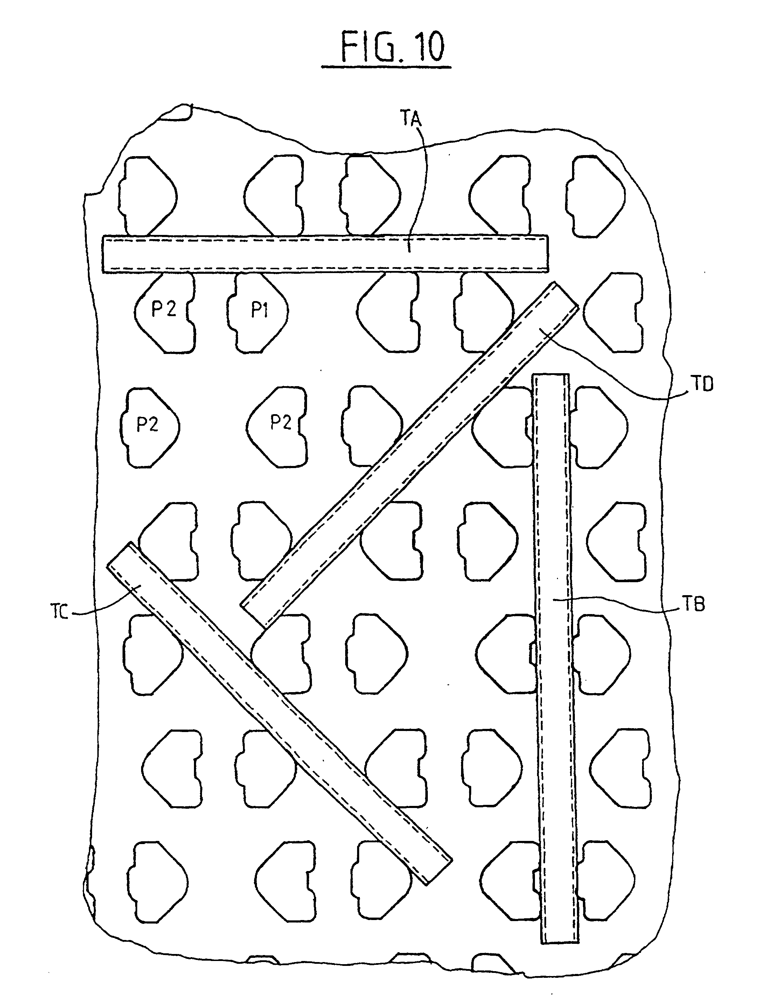

- . la figure 1 est une vue en coupe d'une installation de chauffage à eau chaude par le sol selon l'état de la technique,
- . la figure 2 est une vue en plan schématique d'un exemple de répartition dès tubes d'une installation de chauffage à eau chaude par le sol,
- . la figure 3 est un schéma montrant les différentes orientations que doivent présenter les éléments de tubes,
- . la figure 4 est une vue en plan d'une partie d'une plaque de sol selon l'invention, montrant le tracé des plots,
- . la figure 5 est une vue de dessus d'une plaque de sol montrant différents morceaux de tubes dans les différentes positions d'inclinaison,
- . les figures 6 et 7 montrent deux variantes de réalisation de plots,
- . la figure 8 est une coupe d'un passage de tube dans une plaque selon l'invention,
- . les figures 9A, 9B, 9C montrent trois exemples de dispositions de plots,
- . la figure 10 est un exemple de plaques de sol munies de plots selon les variantes des figures 6 et 7.

La figure 4 montre schématiquement une partie d'une plaque de sol selon l'invention. Cette plaque de sol comporte des plots Pi,j, Pi,j+1, Pi,j+2, Pi+1,j, Pi+1,j+1 ... formant des îlots en pentagones définis par l'intersection de deux réseaux carrés.

Prenant l'orientation conventionnelle correspondant à la figure 4, un premier réseau carré est constitué par les traces horizontales Ai, Ai+1, Ai+2 ... équidistantes et les traces verticales Bj, Bj+1, Bj+2 ... équidistantes.

Ces traces horizontales et verticales définissent un réseau carré de module « a ». A ce réseau est superposé un réseau carré formé des traces Sn, Sn+1 correspondant à une première inclinaison à (+45°) et de traces Rn, Rn+1 correspondant à une deuxième inclinaison à (-45°). Les traces Rn, Rn+1 ... Sn, Sn+1 forment un réseau carré de module $a\sqrt{2}$. Ce réseau carré a pour origine le milieu « O » d'un côté quelconque d'un carré du réseau Ai, Ai+1, par exemple le milieu du côté Bj compris entre les lignes horizontales Ai, Ai+1. Cette origine est située arbitrairement sur ce côté puisque, du fait de la modularité des deux réseaux, cette origine se retrouve au milieu d'autres côtés, par symétrie.

Les deux réseaux sont définis par les axes horizontaux Ai et verticaux Bj pour l'un et les axes inclinés à 45°Sn, Rm pour l'autre. Dans un but de simplification, les traces que peuvent occuper les tubes à eau chaude sont repérées par leur axe respectif. En réalité, ces axes définissent la trace des tubes à positionner, aussi ont-elles une largeur « 1 » correspondant sensiblement à un tube. Ces tubes ont en général un diamètre de 16 ou 20 mm et les traces ont une largeur légèrement inférieure pour créer un effet de pincement. Elles peuvent également être en contre-dépouille comme indiqué ci-après.

Selon l'invention, ces traces laissent subsister les îlots Pij, référencés par colonne et par ligne. Ces îlots définissent le contour extérieur des plots portant la même référence Pij. Ces plots ont une forme de pentagone. La forme réelle des plots doit s'inscrire dans la forme des îlots et les différents côtés du plot doivent toucher au moins partiellement les côtés 100, 101, 102, 103, 104 d'un îlot pour pouvoir tenir à cet endroit le tube qui serait mis en place.

La figure 5 montre un exemple de plaque de sol, représentée partiellement mais avec un nombre important de plots P réalisés et répartis selon l'invention. Ces plots P permettent de recevoir des tubes suivant les directions définies à la figure 3. On a ainsi un tube horizontal TA, un tube vertical TB, un tube TC incliné dans la direction C et un tube TD incliné dans la direction D.

Ces tubes sont représentés par de simples segments pour montrer comment ils sont disposés. En réalité, les tubes sont continus et font des courbes entre les plots pour suivre le tracé imposé.

Les figures 6 et 7 montrent deux formes de plots P1, P2 dont le côté théorique 101 selon la figure 4 comporte une partie centrale PC1 rejoignant le contour théorique 101 et qui est bordée de deux encoches PC2, PC3 en retrait par rapport au contour théorique 101. Les autres côtés correspondent aux côtés 100, 102, 103, 104 définis à la figure 4.

La variante de plot P2 selon la figure 7 se distingue par une autre forme du côté théorique 101. Celle-ci laisse subsister deux parties Pd1, Pd2 arrivant sur le contour théorique 101 mais séparées par une partie en creux Pd3. Les autres côtés du plot P2 correspondent à la forme définie à la figure 4.

La figure 8 montre la mise en place d'un tube T entre deux plots P3, P4 ayant un côté en contre-dépouille et un pion 200 au fond de l'intervalle entre les deux plots P3, P4 pour relever le tube par rapport au fond et le rapprocher de la surface de la chape.

Les figures 9A, 9B, 9C montrent la disposition de plots selon les variantes des figures 6 et 7. Ainsi, la figure 9A montre deux plots P1 juxtaposés pour définir un chemin de passage. La figure 9B montre deux plots P2 et la figure 9C un plot P2 associé à un plot P1.

La figure 10 montre une partie de plaque de sol munie de plots P1, P2 selon une disposition de segments de tubes TA, TB, TC et TD correspondant aux orientations A, B, C, D de la figure 3, de manière analogue à ce qui est représenté à la figure 5.

## Revendications

1. Plaque de sol pour une installation de chauffage par le sol, à tubes d'eau noyés dans la chape de béton, cette plaque étant destinée à être combinée à d'autres plaques identiques ou analogues pour former un tapis de plots recevant le ou les ensembles de tubes pour les bloquer en place jusqu'à la coulée et à la prise du béton, **caractérisée en ce que**
   les plots (Pij) sont constitués par des îlots définis chacun sur cinq côtés par :

   - un premier réseau carré de traces de tubes (Ai, Bj), de module (a) combinés à un deuxième réseau carré (Rm, Sn) de traces de tubes de module $(a\sqrt{2})$, incliné à 45° par rapport au premier réseau et ayant une origine (O) au milieu d'un côté d'un carré du premier réseau (Ai, Bj).

2. Plaque de sol selon la revendication 1, **caractérisée en ce que** les plots ont des côtés en contre-dépouille pour former des traces de tubes en contre-dépouille.

3. Plaque de sol selon la revendication 1, **caractérisée en ce qu'**au moins l'un des côtés (101) d'un plot (P1, P2) a un tracé discontinu.

4. Plaque de sol selon la revendication 3, **caractérisée en ce que** le tracé discontinu est formé par une partie en saillie (PC1) bordée de deux parties en retrait (PC2, PC3).

5. Plaque de sol selon la revendication 3, **caractérisée en ce que** le côté discontinu est constitué par deux parties en saillie (Pdl, Pd2) bordant une partie en retrait (Pd3).

## Patentansprüche

1. Bodenplatte für eine Fußbodenheizungsanlage mit in der Betonschicht eingelassenen Wasserrohren, wobei die Platte zum Verbinden mit weiteren identischen oder ähnlichen Platten vorgesehen ist, um einen Noppenteppich zu bilden, der die Rohranordnung oder Rohranordnungen aufnimmt, um diese bis zur Betonschüttung und bis zum Abbinden des Betons räumlich festzulegen, **dadurch gekennzeichnet, dass**
   die Noppen (Pij) durch kleine Inseln gebildet sind, die jeweils auf fünf Seiten definiert sind durch:

   - ein erstes quadratisches Gitter von Rohrverlaufsbahnen (Ai, Bj) mit Modulus (a) kombiniert mit einem zweiten quadratischen Gitter (Rm, Sn) von Rohrverlaufsbahnen mit Modulus $(a\sqrt{2})$, das gegenüber dem ersten Gitter um 45° geneigt ist und einen Ursprung (O) hat, der in der Mitte einer Seite eines Quadrats des ersten Gitters (Ai, Bj) liegt.

2. Bodenplatte nach Anspruch 1, **dadurch gekennzeichnet, dass** die Noppen seitliche Hinterschneidungen aufweisen, um Rohrverlaufsbahnen mit Hinterschneidungen zu bilden.

3. Bodenplatte nach Anspruch 1, **dadurch gekennzeichnet, dass** wenigstens eine Seite (101) einer Noppe (P1, P2) einen unterbrochenen Verlauf aufweist.

4. Bodenplatte nach Anspruch 3, **dadurch gekennzeichnet, dass** der unterbrochene Verlauf durch einen vorspringenden Bereich (PC1) gebildet ist, der durch zwei rückspringende Bereiche (PC2, PC3) begrenzt ist.

5. Bodenplatte nach Anspruch 3, **dadurch gekennzeichnet, dass** die unterbrochene Seite durch zwei vorspringende Bereiche (Pd1, Pd2) gebildet ist, die einen rückspringenden Bereich (Pd3) begrenzen.

## Claims

1. Floor plate for an underfloor heating installation having water pipes embedded in the concrete screed, which plate is to be combined with other identical or similar plates to form a covering of studs which receives the assembly or assemblies of pipes and holds them in place until the concrete is poured and sets, **characterised in that**
   the studs (Pij) are constituted by blocks which are each defined on five sides by:

   - a first square network of pipe paths (Ai, Bj) of modulus (a) which are combined with a second square network (Rm, Sn) of pipe paths of modulus ($a\sqrt{2}$), which second network is inclined at 45° relative to the first network and has an origin (O) in the centre of a side of a square of the first network (Ai, Bj).

2. Floor plate according to claim 1, **characterised in that** the studs have undercut sides to form undercut pipe paths.

3. Floor plate according to claim 1, **characterised in that** at least one of the sides (101) of a stud (P1, P2) has a discontinuous outline.

4. Floor plate according to claim 3, **characterised in that** the discontinuous outline is formed by a projecting portion (PC1) bordered by two set-back portions (PC2, PC3).

5. Floor plate according to claim 3, **characterised in that** the discontinuous side is constituted by two projecting portions (Pd1, Pd2) bordering a set-back portion (Pd3).

FIG.1

FIG. 2

FIG. 3

# FIG.4

# FIG.5

## FIG.6

103 P1 104
102 PC1 100
PC2 PC3
101

## FIG.7

P2
Pd3
Pd4 101 Pd2

## FIG.8

P3 P4
I
200

## FIG.9A

P1 P1

## FIG.9B

P2 P2

## FIG.9C

P2 P1

# FIG. 10